# EUROPEAN PATENT APPLICATION

(11) **EP 1 594 054 A2**
(43) Date of publication of application: **09.11.2005**
(21) Application number: 05103672.1
(22) Date of filing: 03.05.2005
(51) Int. Cl.: G06F 9/44

(54) **Systems and methods for an improved user interface shell for small computer devices**

(30) Priority: 03.05.2004 US 567676; 03.09.2004 US 934248
(71) Applicant: MICROSOFT CORPORATION, Redmond, Washington 98052-6399 (US)
(72) Inventor: Gritsenko, Anastasia, Redmond, WA 98052 (US); Williams, David W., Redmond, WA 98052 (US); Luke, Hok-Sum Horace, Redmond, WA 98052 (US); Berkes, Otto G., Redmond, WA 98052 (US); Blanco, Victor K., Redmond, WA 98052 (US)
(74) Representative: Grünecker, Kinkeldey, Stockmair & Schwanhäusser Anwaltssozietät

(57) **Abstract**

Various embodiments of the present invention are directed to systems and methods for to an improved user interface shell for small computer devices (SCD)s that execute typical operating systems and application programs. Several embodiments of the present invention are directed to a shell task user interface (STUI) that resides on top of the native operating system and application programs to enable an end-user to conveniently utilize the SCD and its operating system and applications programs in a more convenient way that is characteristic with the ways in which SCDs are typically utilized.

## Description

### CROSS REFERENCE TO RELATED APPLICATIONS

This application claims benefit of U.S. Provisional Application No. 60/567,676, entitled "SYSTEMS AND METHODS FOR AN IMPROVED USER INTERFACE SHELL FOR SMALL COMPUTER DEVICES," filed May 3, 2004 (Atty. Docket No. MSFT-3958 / 308836.01), the entire contents of which are hereby incorporated herein by reference.

### TECHNICAL FIELD

The present invention relates generally to small computer devices and, more specifically, to an improved user interface shell for small computer devices that execute typical operating systems and application programs.

### BACKGROUND

Among trends in the history of computing are miniaturization and personalization: from large mainframes to personal desktops, handhelds, and even wearable computer systems. The adoption of such devices by the broader and more diverse population is also growing, and today's technology includes full-powered computing devices that comfortably fit in the palm of one's hand.

Handheld computers are used in different contexts and for different purposes than traditional desktops and, therefore, they pose different constraints and challenges for designers. A few years ago, Microsoft Corporation developed its own solution for an operating system running on handheld computers, namely WindowsCE for the PocketPC and HandheldPC devices. Windows CE is a much less powerful version of the Windows desktop operation operating system (OS) that was created for the consumer electronic devices with much less computing power than a common desktop PC. However, the limitations of WindowsCE has created demand for mobile computing devices that can more fully utilize contemporary full-power operating systems and applications.

Small computer devices (SCDs) are robust computer systems that functionally rival desktop and laptop computers and which are capable of running the standard full-size operating system but which are, as the name suggests, physically much smaller in overall size. SCDs generally comprise a very-high-resolution display (with resolutions akin to those for laptop computers, e.g., 640x480), a micro 84-key QWERTIF keyboard (which is the same arrangement typical for laptop computers), and a pointer device of some kind (for example, a mouse and its equivalents such as a pointing stick, a touchpad, a trackball, etc.). In addition, SCDs may also comprise touch-screen capabilities (somewhat akin to a Pocket PC), additional specialized buttons (such as a series of button in a circumferential "race-track" arrangement around the very-high-resolution display), and specialized on-the-go pointer/selection devices (such as a super-dogbone pointer/selection device). In addition to the user interfaces, SCDs may also comprise wireless communication devices, integrated video capture devices (e.g., a camera), removable media, and a plethora of other devices in addition to the standard components of a personal computer system including, without limitation, a CPU, RAM, persistent storage device(s), and other computer components described in more detail later herein.

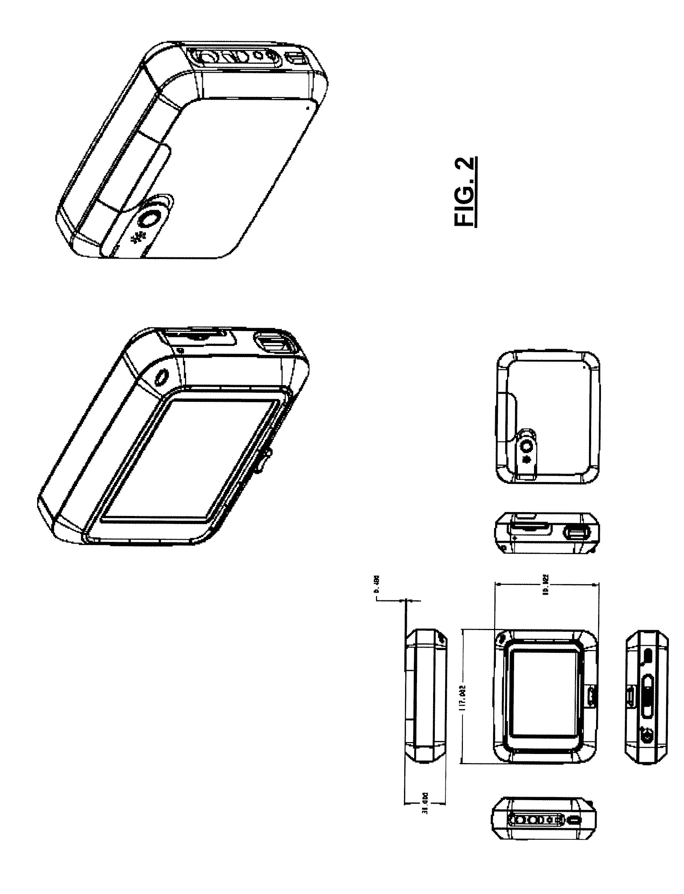

One example of a SCD is Microsoft's "GoPC" (schematics illustrations for which are included as Fig. 2). The GoPC is an ultra-mobile personal computer, communication, and media consumption device that has many of the same attributes as a Windows PC: a hard drive, an x86 processor, a high-quality full-color display, a QWERTY keyboard, network connectivity, and flexible peripheral expansion.

While having all of the power of a robust laptop conveniently packaged in an SCD, there are certain natural disadvantages to its small size. For example, the SCD keyboard is very small and unsuitable for normal typing tasks and, despite the very-high-resolution display, detailed point-and-click operations are considerably more challenging (e.g., the drop-down menus for standard applications programs running on an SCD may be clear but will be very, very tiny and difficult to point at with any pointer/selector device). Moreover, SCDs are generally not used in the same way as "full-size" systems (laptops and personal computer systems), but operating systems and application programs developed for full-size systems do not account for (nor provide functionality to support) operations on an SCD. Indeed, SCDs are not a replacement for desktop, laptop, or Tablet PC machines but, rather, as an extension of the computer system experience into the area of a personal and consumer domains.

Therefore, while the GoPC specifically provides more of a general platform for ultra personal computing that can be built upon (with operating systems, applications, expansion components, etc.) rather than being a specific end-product, the user experience and expectations are still different from those for full-size computer systems. Consequently, a common user interface to fit all form factors (including but not limited to full-size systems and SCDs) and contexts of use (including but not limited to at-the-desk operation and on-the-go mobile utilization) could not deliver successful user experience.

What is needed in the art is an improved user interface specifically for SCDs that enables an end-user to conveniently utilize the SCD and its operating system and applications programs in a more convenient way that is characteristic with the ways in which SCDs are typically utilized.

### SUMMARY

Various embodiments of the present invention are directed to systems and methods for to an improved user interface shell for SCDs that execute typical operating systems and application programs. Several embodiments of the present invention are directed to a shell task user interface (STUI) that resides on top of the native operating system and application programs to enable an end-user to conveniently utilize the SCD and its operating system and applications programs in a more convenient way that is characteristic with the ways in which SCDs are typically utilized.

### BRIEF DESCRIPTION OF THE DRAWINGS

The foregoing summary, as well as the following detailed description of preferred embodiments, is better understood when read in conjunction with the drawings, tables, and other visual representations incorporated herein, attached hereto, or included herewith. For the purpose of illustrating the invention, there is shown in these drawings exemplary constructions of the invention or illustrations of its functionality and methods; however, the invention is not limited to the specific methods and instruznentalities disclosed.

Fig. 1 is a block diagram representing a computer system in which aspects of the present invention may be incorporated;

Fig. 2 is a collection of two-dimensional and three-dimensional schematic diagrams illustrating the general appearance of an exemplary SCD (in this case, the Microsoft GoPC);

Fig. 3 illustrates a 3x4-inch display (hereinafter, a "3x4") of an exemplary SCD (in this case, the Microsoft GoPC) running (and thus displaying) an exemplary standard, full-size operating system (in this, Microsoft Windows XP) and an exemplary standard, full-size application program (in this case Microsoft PowerPoint XP); and

Figs. 4A-4E and Figs. 5A-5E are various illustrations of a 3x4 display for an SCD running the shell task user interface (STUI) of several embodiments of the present invention residing on top of the native operating system (that would otherwise be displayed) in order to provide end-users with more useful (i.e., larger) buttons on the touch screen for the tasks and activities that are more frequently used on such an SCD.

### DETAILED DESCRIPTION

The subject matter is described with specificity to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the term "step" may be used herein to connote different elements of methods employed, the term should not be interpreted as implying any particular order among or between various steps herein disclosed unless and except when the order of individual steps is explicitly described.

### Computer Environment

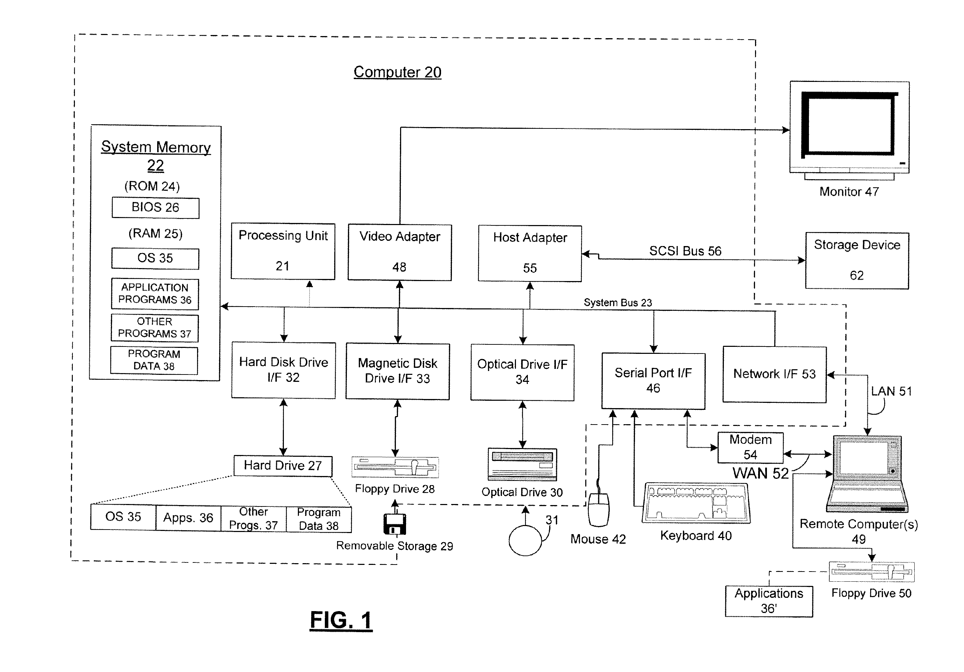

Numerous embodiments of the present invention may execute on a computer. Fig. 1 and the following discussion is intended to provide a brief general description of a suitable computing environment in which the invention may be implemented. Although not required, the invention will be described in the general context of computer executable instructions, such as program modules, being executed by a computer, such as a client workstation or a server. Generally, program modules include routines, programs, objects, components, data structures and the like that perform particular tasks or implement particular abstract data types. Moreover, those skilled in the art will appreciate that the invention may be practiced with other computer system configurations, including hand held devices, multi processor systems, microprocessor based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

As shown in Fig. 1, an exemplary general purpose computing system includes a conventional personal computer 20 or the like, including a processing unit 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system 26 (BIOS), containing the basic routines that help to transfer information between elements within the personal computer 20, such as during start up, is stored in ROM 24. The personal computer 20 may further include a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer readable media provide non volatile storage of computer readable instructions, data structures, program modules and other data for the personal computer 20. Although the exemplary environment described herein employs a hard disk, a removable magnetic disk 29 and a removable optical disk 31, it should be appreciated by those skilled in the art that other types of computer readable media which can store data that is accessible by a computer, such as magnetic cassettes, flash memory cards, digital video disks, Bernoulli cartridges, random access memories (RAMs), read only memories (ROMs) and the like may also be used in the exemplary operating environment.

A number of program modules may be stored on the hard disk, magnetic disk 29, optical disk 31, ROM 24 or RAM 25, including an operating system 35, one or more application programs 36, other program modules 37 and program data 38. A user may enter commands and information into the personal computer 20 through input devices such as a keyboard 40 and pointing device 42. Other input devices (not shown) may include a microphone, joystick, game pad, satellite disk, scanner or the like. These and other input devices are often connected to the processing unit 21 through a serial port interface 46 that is coupled to the system bus, but may be connected by other interfaces, such as a parallel port, game port or universal serial bus (USB). A monitor 47 or other type of display device is also connected to the system bus 23 via an interface, such as a video adapter 48. In addition to the monitor 47, personal computers typically include other peripheral output devices (not shown), such as speakers and printers. The exemplary system of Fig. 1 also includes a host adapter 55, Small Computer System Interface (SCSI) bus 56, and an external storage device 62 connected to the SCSI bus 56.

The personal computer 20 may operate in a networked environment using logical connections to one or more remote computers, such as a remote computer 49. The remote computer 49 may be another personal computer, a server, a router, a network PC, a peer device or other common network node, and typically includes many or all of the elements described above relative to the personal computer 20, although only a memory storage device 50 has been illustrated in Fig. 1. The logical connections depicted in Fig. 1 include a local area network (LAN) 51 and a wide area network (WAN) 52. Such networking environments are commonplace in offices, enterprise wide computer networks, intranets and the Internet.

When used in a LAN networking environment, the personal computer 20 is connected to the LAN 51 through a network interface or adapter 53. When used in a WAN networking environment, the personal computer 20 typically includes a modem 54 or other means for establishing communications over the wide area network 52, such as the Internet. The modem 54, which may be internal or external, is connected to the system bus 23 via the serial port interface 46. In a networked environment, program modules depicted relative to the personal computer 20, or portions thereof, may be stored in the remote memory storage device. It will be appreciated that the network connections shown are exemplary and other means of establishing a communications link between the computers may be used.

While it is envisioned that numerous embodiments of the present invention are particularly well-suited for computerized systems, nothing in this document is intended to limit the invention to such embodiments. On the contrary, as used herein the term "computer system" is intended to encompass any and all devices capable of storing and processing information and/or capable of using the stored information to control the behavior or execution of the device itself, regardless of whether such devices are electronic, mechanical, logical, or virtual in nature.

### Shell Task User Interface (STUI)

Various embodiments of the present invention are directed to systems and methods for a shell task user interface (STUI) that resides on top of the native operating system and application programs to enable an end-user to conveniently utilize an SCD (such as the GoPC, a schematic drawing of which is provided as Fig. 2) and a "full-size" operating system and applications programs in a more convenient way that is characteristic with the ways in which SCDs are typically utilized.

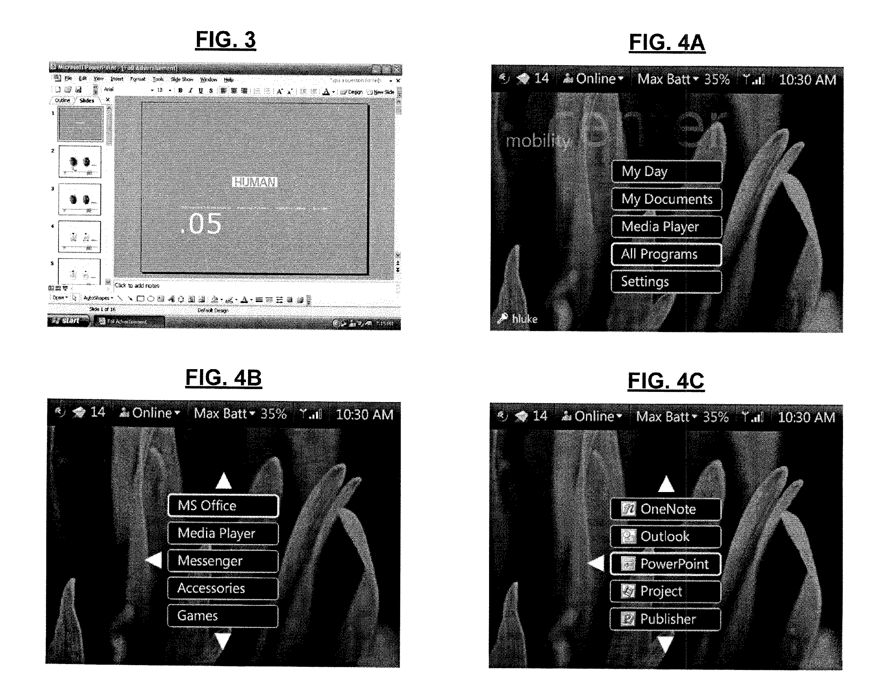

In general, an application running on a SCD with its native user interface can be somewhat challenging to use if you consider the size of the display, even a very-high-resolution display, which may be no more than approximately three inches by four inches (see Fig. 3 which illustrates a 3x4-inch display for an SCD). However, while preserving the end-users ability to directly interact with the full-size operating system and applications in their native user interfaces, the STUI resides on top of the native display (e.g., as illustrated in Fig. 4A) to provide users with more useful (i.e., larger) buttons on the touch screen for the tasks and activities that are more frequently used on an SCD. In addition to larger buttons for key functionality, however, the STUI also enhances user interaction on an application-by-applications basis.

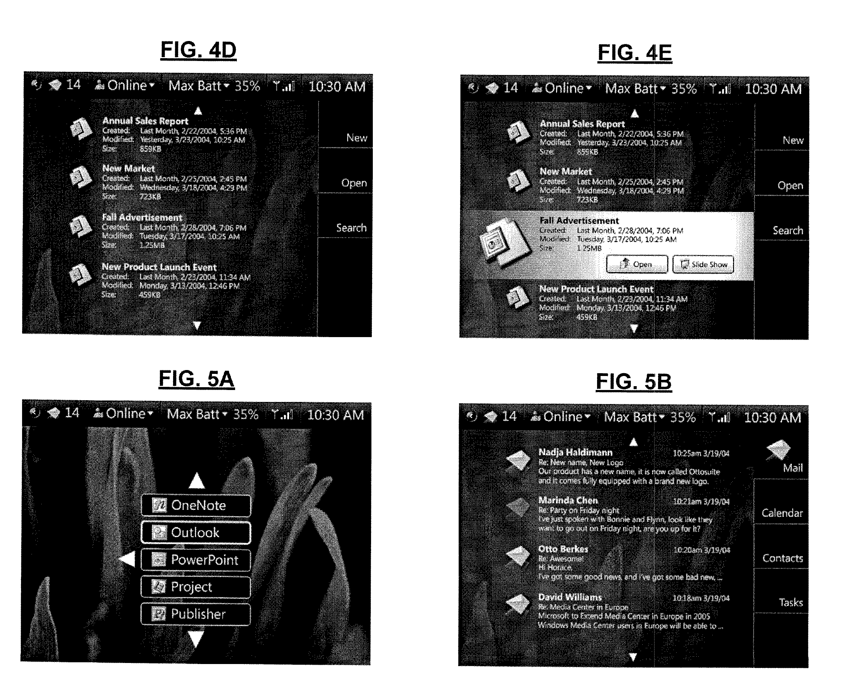

For example, consider executing a Microsoft PowerPoint presentation―a typical use of this particular application on an SCD. Figs. 4A-4E and Figs. 5A-5E illustrate the enhanced user experience afforded by the STUI. In Fig. 4A, a user selects the "All Programs" STUI button from the top-level main-menu screen and a rolling list of programs is displayed as illustrated in Fig. 4B. Scrolling down to the next page of the menu as illustrated in Fig. 4C, the end-user selects the PowerPoint application and, as illustrated in Fig. 4D, a special shell menu for PowerPoint is displayed listing the most recently used PowerPoint presentation files. As the end-user scrolls down through the list (i.e., to the third file displayed, as illustrated in Fig. 4E), the end-user is provided with two large buttons, one to "open" the presentation (in its native form with the full-size screen GUI as shown back in Fig. 3) or to immediately begin a "slide show" with the file. This latter option―a slide show―is a typical use of PowerPoint on a SCD―a more typical use than editing a slideshow which an end-user would prefer to do on a full-size computer with a full-size display, keyboard, and pointing device―and thus the presentation of this immediate STUI button option for the SCD enables an end-user to proceed to execute this typical use without the need to go through the difficult-to-navigate full-screen application GUI on the SCD.

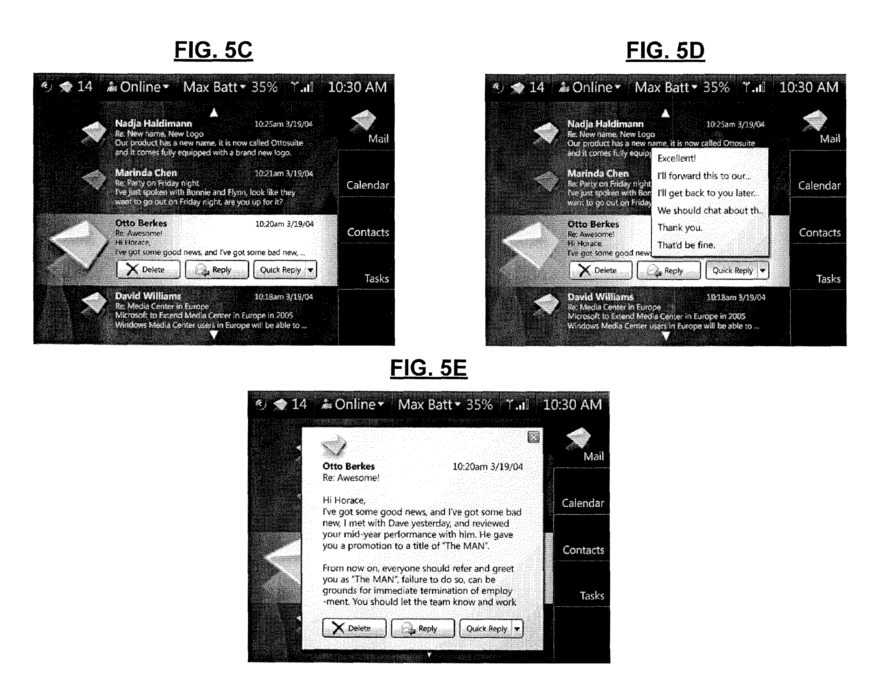

Similarly, if the end-user, instead of selecting PowerPoint from the menu (as shown in Fig. 4C), had selected Microsoft Outlook instead (as shown in Fig. 5A), a special shell menu for Outlook would be displayed listing the end-users inbox with the most recently received email messages for the user with a brief "preview" of the contents of the message (as shown in Fig. 5B). As the end-user scrolls down through the list (i.e., to the third email message shown , as illustrated in Fig. 5C), the end-user is provided with three large buttons, one to "delete" the message, one to "reply" to the message, and one to "quick reply" to the message. The "quick reply" option (as illustrated in Fig. 5D) provides the end-user with a short list ofpre-penned quick replies that the end-user can use to preclude the need for typing (if the situation is appropriate for a quick reply that is). The list of quick replies may also be editable by the end-user. Also the end-user has a fourth option of "viewing" the email message in whole (as illustrated in Fig. 5E) by selecting the message itself (e.g., double clicking on the touch screen directly on the message but not on one of the three buttons), and the displayed message with again have the three STUI quick buttons displayed for easy and immediate attention by the end-user. All four options (three buttons and one direct select) represent typical uses of Outlook on a SCD―a more typical use than originating and drafting long email messages which an end-user would prefer to do on a full-size computer with a full-size display, keyboard, and pointing device―and thus the presentation of these immediate STUI button and direct selection options for the SCD enables an end-user to proceed to perform what are typical use of Outlook on an SCD without the need to go through the difficult-to-navigate full-screen application GUI on the SCD.

Other examples of functionality that various embodiments of the present invention may provide include but are not limited to the following:
- For Microsoft Word, the end-user would be presented with a list of most recently used documents followed by a list of all documents in the MyDocuments folder (including subfolders) and, for each document, the end-user would see STUI buttons comprising, for example, a button for viewing the document in a full-screen "reader" mode since "reading" a document is a more typical operation for an end-user on an SCD than would be editing or drafting a new document (although the end-user would still be able to do via the native full-size application GUI).
- For Microsoft Excel the end-user would be presented with a list of most recently used spreadsheets followed by a list of all spreadsheets in the MyDocuments folder (including subfolders) and, for each spreadsheet, the end-user would see STUI buttons comprising, for example, a button for viewing the spreadsheet in a full-screen "reader" mode since "reading" a spreadsheet is a more typical operation for an end-user on an SCD than would be editing or drafting a new spreadsheet (although the end-user would still be able to do via the native full-size application GUI).
- For a media player, the STUI would provide media functionality buttons would be larger and thus easier to use on an SCD that in the native GUI for the media application.
- For a calendar program, the STUI would provide an easy-to-use button for adding a new calendar item, among other things.

### Additional Functionality

In addition to the forgoing, certain embodiments may include additional functionality (some of which may have been previously alluded to herein) as follows:
- For certain embodiments, the STUI may also comprise a mobile taskbar as illustrated in Figs. 4A-4E and 5A-5E that may comprise useful information most suitable for an SCD, comprising (but not limited to) a new message count, time, signal strength, and battery life (possibly using a color-code scheme where, for example, the percentage is shown in green when 50% or great, shown in yellow for 20-50%, and shown in red for less than 20%).
- For certain embodiments, the STUI may also comprise a root/menu system that traverses the functionality of an application program differently than the menus for application itself would be traversed for the same functionality (i.e., the traversal for a slideshow in the STUI as a one-click button equivalent to three-part Open-SlideShow-ViewShow menu commands that are the STUI's equivalent).

### Conclusion

The various system, methods, and techniques described herein may be implemented with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computer will generally include a processor, a storage medium readable by the processor (including volatile and non-volatile memory and/or storage elements), at least one input device, and at least one output device. One or more programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

The methods and apparatus of the present invention may also be embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, the machine becomes an apparatus for practicing the invention. When implemented on a general-purpose processor, the program code combines with the processor to provide a unique apparatus that operates to perform the indexing functionality of the present invention.

While the present invention has been described in connection with the preferred embodiments of the various figures, it is to be understood that other similar embodiments may be used or modifications and additions may be made to the described embodiment for performing the same function of the present invention without deviating there from. For example, while exemplary embodiments of the invention are described in the context of digital devices emulating the functionality of personal computers, one skilled in the art will recognize that the present invention is not limited to such digital devices, as described in the present application may apply to any number of existing or emerging computing devices or environments, such as a gaming console, handheld computer, portable computer, etc. whether wired or wireless, and may be applied to any number of such computing devices connected via a communications network, and interacting across the network. Furthermore, it should be emphasized that a variety of computer platforms, including handheld device operating systems and other application specific hardware/software interface systems, are herein contemplated, especially as the number of wireless networked devices continues to proliferate. Therefore, the present invention should not be limited to any single embodiment, but rather construed in breadth and scope in accordance with the appended claims.

## Claims

1. A method for improving end-user experience on a small computer device (SCD) having a high resolution display (HRD) and capable of executing a full-size operating system environment (OSE) comprising a full-size operating system and a plurality of full-size application programs, and also capable of displaying an OSE native output (that is, a display output that would normally occurs on a full-size computer system), said method comprising the utilization of shell task user interface (STUI) visually and functionally residing on top of said standard operating system on said HSD, said STUI comprising a plurality of easy-to-use graphical buttons (EGBs) for a subset of functionality afforded by said operation system.

2. The method of claim 1 wherein said subset of functionality afforded by said operating system comprises a plurality of frequently used functions for a SCD.

3. The method of claim 2 wherein said STUI further comprises a multilevel menu comprised of said plurality of EGBs such that the selection of at least one button from among said plurality of EGBs on a first menu results in the display of at least one additional set of EGBs on a second menu.

4. The method of claim 3 wherein said menu further comprises a scroll bar for the display of additional EGBs.

5. The method of claim 4 wherein at least one button from among said EGBs executes an application in said OSE and displays said application in an easy-to-use display format (EDF) that is distinct from said OSE native output and which corresponds to a subset of functionality afforded by said application.

6. The method of claim 5 wherein said subset of functionality afforded by said application comprises a plurality of frequently used functions for a SCD (for example, wherein said application is an Outlook-like email application, and wherein said EDF comprises a scrollable list of new email).

7. The method of claim 4 wherein at least one button from among said EGBs executes a first file in an application in said OSE and uses said application to display a file output for said first file in an easy-to-use display format (EDF) that is distinct from said OSE native output and which corresponds to a subset of functionality afforded by said application (for example, wherein said first file is a Word-type document file, wherein said application is a Word-type application, and wherein said EDF comprises an easily readable display of text from said first file).

8. The method of claim 4 wherein at least one button from among said EGBs executes a first file in an application in said OSE and uses said application to display a file output for said first file in a presentation display format of said OSE that is frequently used for a SCD.

9. The method of claim 8 wherein said presentation display format of said OSE that is frequently used for a SCD is a special presentation display format in which said first file cannot be automatically displayed in said presentation display format when opened by said application in said OSE via said OSE native display (for example, wherein said first file is a PowerPoint-type file, wherein said application is a PowerPoint-type application, and said special presentation display format a SlideShow-type format.

10. A system for improving end-user experience on a small computer device (SCD) having a high resolution display (HRD) and capable of executing a full-size operating system environment (OSE) comprising a full-size operating system and a plurality of full-size application programs, and also capable of displaying an OSE native output (that is, a display output that would normally occurs on a full-size computer system), said system comprising at least one subsystem for the utilization of shell task user interface (STUI) visually and functionally residing on top of said standard operating system on said HSD, said STUI comprising a plurality of easy-to-use graphical buttons (EGBs) for a subset of functionality afforded by said operation system.

11. The system of claim 10 further comprising at least one subsystem whereby said STUI further comprises a mobile taskbar that comprises at least one item of information pertaining specifically to an aspect of operation of said SCD.

12. The system of claim 11 further comprising at least one subsystem whereby said at least one item of information pertaining specifically to an aspect of operation of said SCD comprises at least one information item from among the fallowing plurality of information items: a new message count; a time; a signal strength; a battery life.

13. The system of claim 10 further comprising at least one subsystem whereby said subset of functionality afforded by said operating system comprises a plurality of frequently used functions for a SCD.

14. The system of claim 13 further comprising at least one subsystem whereby said STUI further comprises a multilevel menu comprised of said plurality of EGBs such that the selection of at least one button from among said plurality of EGBs on a first menu results in the display of at least one additional set of EGBs on a second menu.

15. The system of claim 14 further comprising at least one subsystem whereby at least one button from among said EGBs executes an application in said OSE and displays said application in an easy-to-use display format (EDF) that is distinct from said OSE native output and which corresponds to a subset of functionality afforded by said application.

16. The system of claim 14 further comprising at least one subsystem whereby at least one button from among said EGBs executes a first file in an application in said OSE and uses said application to display a file output for said first file in an easy-to-use display format (EDF) that is distinct from said OSE native output and which corresponds to a subset of functionality afforded by said application.

17. The system of claim 14 further comprising at least one subsystem whereby at least one button from among said EGBs executes a first file in an application in said OSE and uses said application to display a file output for said first file in a presentation display format of said OSE that is frequently used for a SCD.

18. The system of claim 17 further comprising at least one subsystem whereby said presentation display format of said OSE that is frequently used for a SCD is a special presentation display format in which said first file cannot be automatically displayed in said presentation display format when opened by said application in said OSE via said OSE native display.

19. A computer-readable medium comprising computer-readable instructions for improving end-user experience on a small computer device (SCD) having a high resolution display (HRD) and capable of executing a full-size operating system environment (OSE) comprising a full-size operating system and a plurality of full-size application programs, and also capable of displaying an OSE native output (that is, a display output that would normally occurs on a full-size computer system), said computer-readable instructions comprising instructions for the utilization of shell task user interface (STUI) visually and functionally residing on top of said standard operating system on said HSD, said STUI comprising a plurality of easy-to-use graphical buttons (EGBs) for a subset of functionality afforded by said operation system.

20. The computer-readable instructions of claim 19 further comprising computer-readable instructions whereby said STUI further comprises a mobile taskbar that comprises at least one item of information pertaining specifically to an aspect of operation of said SCD.

21. The computer-readable instructions of claim 20 further comprising computer-readable instructions whereby said at least one item of information pertaining specifically to an aspect of operation of said SCD comprises at least one information item from among the following plurality of information items: a new message count; a time; a signal strength; a battery life.

22. The computer-readable instructions of claim 19 further comprising computer-readable instructions whereby said subset of functionality afforded by said operating system comprises a plurality of frequently used functions for a SCD.

23. The computer-readable instructions of claim 22 further comprising computer-readable instructions whereby said STUI further comprises a multilevel menu comprised of said plurality of EGBs such that the selection of at least one button from among said plurality of EGBs on a first menu results in the display of at least one additional set of EGBs on a second menu.

24. The computer-readable instructions of claim 23 further comprising computer-readable instructions whereby said menu further comprises a scroll bar for the display of additional EGBs.

25. The computer-readable instructions of claim 24 further comprising computer-readable instructions whereby at least one button from among said EGBs executes an application in said OSE and displays said application as said OSE native output.

26. The computer-readable instructions of claim 24 further comprising computer-readable instructions whereby at least one button from among said EGBs executes an application in said OSE and displays said application in an easy-to-use display format (EDF) that is distinct from said OSE native output and which corresponds to a subset of functionality afforded by said application.

27. The computer-readable instructions of claim 26 further comprising computer-readable instructions whereby said subset of functionality afforded by said application comprises a plurality of frequently used functions for a SCD.

28. The computer-readable instructions of claim 27 further comprising computer-readable instructions whereby said application is an Outlook-like email application, and whereby said EDF comprises a scrollable list of new email.

29. The computer-readable instructions of claim 24 further comprising computer-readable instructions whereby at least one button from among said EGBs executes a first file in an application in said OSE and uses said application to display a file output for said first file in an easy-to-use display format (EDF) that is distinct from said OSE native output and which corresponds to a subset of functionality afforded by said application.

30. The computer-readable instructions of claim 29 further comprising computer-readable instructions whereby said first file is a Word-type document file, whereby said application is a Word-type application, and whereby said EDF comprises an easily readable display of text from said first file.

31. The computer-readable instructions of claim 24 further comprising computer-readable instructions whereby at least one button from among said EGBs executes a first file in an application in said OSE and uses said application to display a file output for said first file in a presentation display format of said OSE that is frequently used for a SCD.

32. The computer-readable instructions of claim 31 further comprising computer-readable instructions whereby said presentation display format of said OSE that is frequently used for a SCD is a special presentation display format in which said first file cannot be automatically displayed in said presentation display format when opened by said application in said OSE via said OSE native display.

33. The computer-readable instructions of claim 32 further comprising computer-readable instructions whereby said first file is a PowerPoint-type file, whereby said application is a PowerPoint-type application, and said special presentation display format a SlideShow-type format.

34. A hardware control device for improving end-user experience on a small computer device (SCD) having a high resolution display (HRD) and capable of executing a full-size operating system environment (OSE) comprising a full-size operating system and a plurality of full-size application programs, and also capable of displaying an OSE native output (that is, a display output that would normally occurs on a full-size computer system), said hardware control device comprising means for the utilization of shell task user interface (STUI) visually and functionally residing on top of said standard operating system on said HSD, said STUI comprising a plurality of easy-to-use graphical buttons (EGBs) for a subset of functionality afforded by said operation system.

35. The hardware control device of claim 34 further comprising means whereby said STUI further comprises a mobile taskbar that comprises at least one item of information pertaining specifically to an aspect of operation of said SCD.

36. The hardware control device of claim 35 further comprising means whereby said at least one item of information pertaining specifically to an aspect of operation of said SCD comprises at least one information item from among the following plurality of information items: a new message count; a time; a signal strength; a battery life.

37. The hardware control device of claim 34 further comprising means whereby said subset of functionality afforded by said operating system comprises a plurality of frequently used functions for a SCD.

38. The hardware control device of claim 37 further comprising means whereby said STUI further comprises a multilevel menu comprised of said plurality of EGBs such that the selection of at least one button from among said plurality of EGBs on a first menu results in the display of at least one additional set of EGBs on a second menu.

39. The hardware control device of claim 38 further comprising means whereby at least one button from among said EGBs executes an application in said OSE and displays said application as said OSE native output.

40. The hardware control device of claim 38 further comprising means whereby at least one button from among said EGBs executes an application in said OSE and displays said application in an easy-to-use display format (EDF) that is distinct from said OSE native output and which corresponds to a subset of functionality afforded by said application, and further comprising means whereby said subset of functionality afforded by said application comprises a plurality of frequently used functions for a SCD.
